# EUROPÄISCHE PATENTSCHRIFT

(11) **EP 1 869 839 B1**
(45) Veröffentlichungstag und Bekanntmachung des Hinweises auf die Patenterteilung: **08.09.2010**
(21) Anmeldenummer: 06725540.6
(22) Anmeldetag: 04.04.2006
(51) Int. Cl.: H04L 12/56

(54) **Verfahren, Computerprogrammprodukt und Netzknotenelement zur schnelleren Erkennung von Störungen auf Übertragungswegen und oder in Knoten**
Method, computer program product and network node element for the rapid identification of malfunctions in transmission paths and/or in nodes
Procédös, progiciel et element de noeuds de röseau pour identifier plus rapidement des defaillances sur des voies de transmission et/ou dans des noeuds

(30) Priorität: 13.04.2005 DE 102005017021
(43) Veröffentlichungstag der Anmeldung: 26.12.2007
(73) Patentinhaber: Siemens Enterprise Communications GmbH & Co. KG, 81379 München (DE)
(72) Erfinder: VEITS, Oliver, 85221 Dachau (DE)
(74) Vertreter: Fritzsche, Thomas
(86) Internationale Anmeldenummer: PCT/EP2006/061304
(87) Internationale Veröffentlichungsnummer: WO 2006/108776

(56) Entgegenhaltungen:
- DE-A1- 10 334 632

## Beschreibung

Die Erfindung betrifft ein Verfahren zur Kommunikation zwischen Netzknotenelementen, insbesondere Routern, bei dem eine Information über einen vollständigen oder teilweisen Ausfall oder eine Fehlfunktion eines Netzknotenelementes an benachbarte Netzknotenelemente übermittelt wird.

Netzelemente, welche zumindest teilweise Wegführungsfunktionen eines Vermittlungsrechners innehaben, werden auch als Netzknotenelemente bezeichnet. Ein weitläufig bekanntes Netzknotenelement ist der so genannte Router.

Ein Router vermittelt eintreffende Datenpakete über weitere Netzknotenelemente bzw. Router zu einem vorgesehenen Netzelement in einem zu bestimmenden Zielnetz. Beim Eintreffen von Datenpaketen bestimmt ein Router einen optimalen Weg zum Ziel-Netzelement, wobei der Weg über weitere Netzknotenelemente bzw. Router verlaufen kann. In diesem Zusammenhang wird im Router eine geeignete Schnittstelle ausgewählt, über welche die Datenpakete weiterzuleiten sind. Der Router macht hierzu von einer lokal vorgehaltenen Routingtabelle Gebrauch. Die Einträge in dieser Tabelle können statisch oder dynamisch sein. Statische Einträge werden durch Einträge eines Netzwerkverwalters getätigt, während dynamische Einträgt im laufenden Betrieb angelegt und modifiziert werden. Das Anlegen und die Modifikation der dynamischen Einträge erfolgt dabei unter Anwendung so genannter Routingprotokolle.

Routingprotokolle dienen einem Austausch von Routing-Informationen und erlauben es den Routern, ihre Routing-Tabellen dynamisch aufzubauen und an veränderte Gegebenheiten anzupassen. Ein wichtiger Fall veränderter Gegebenheiten ist dabei ein vollständiger oder teilweiser Ausfall des Routers. Ein solcher Ausfall eines benachbarten Routers wird auch als »Neighbour Down« bezeichnet. Ein teilweiser Ausfall kann z.B. eine einzelne Schnittstelle des Routers betreffen, bei der die übrigen Schnittstellen des Routers intakt geblieben sind, während ein vollständiger Ausfall die gesamten Funktionen des Routers außer Kraft setzt.

Im folgenden beinhaltet die Bezeichnung Ausfall sowohl teilweise als auch vollständige Ausfälle. Weiterhin wird im folgenden aus Gründen der Verständlichkeit der Begriff Router für Netzknotenelemente im Allgemeinen gewählt, ohne dadurch die Betrachtung auf die spezielle Ausführung eines Routers einzuengen.

Bei einem Verbund einer Mehrzahl von Routern oder bei einem Anschluss mehrerer Router an ein so genanntes Broadcast-Medium, wie z.B. einem Ethernet-Switch tritt bei Ausfall eines Routers das Problem auf, den verbundenen Nachbar-Routern mitzuteilen, dass der ausgefallene Router nicht weiter betriebsbereit ist.

Bisherige im Stand der Technik bekannte Lösungen dieses Problems sehen vor, dass die Nachbar-Router untereinander Nachrichten austauschen, welche die Betriebsbereitschaft eines Routers anzeigen und bei deren Ausbleiben ein Ausfall des Routers festgestellt werden kann.

In der deutschen Offenlegungsschrift DE 103 34 632 wird ein Verfahren zum Austausch von Statusinformationen zwischen Routern offenbart, bei dem Statusinformationen zwischen benachbarten Routern mittels des OSPF-Protokolls ausgetauscht werden.

In wiederkehrenden Zeitintervallen übermittelte Nachrichten mit dem vorgenannten Zweck werden oftmals auch als »Hello-Nachrichten« bezeichnet. Hello-Nachrichten sind in bekannten Routingprotokollen wie z.B. OSPF (Open Shortest Parth First) oder IS-IS (Intermediate System to Intermediate System Protocol) vorgesehen.

Die beiden Routingprotokolle OSPF und IS-IS sind Beispiele für sogenannte »Link-State-Protokolle« und zählen damit zu den Routingprotokollen, die zum Aufbau einer Topologiedatenbank dienen. Bei einem Routing mit Link-State-Protokollen werden im Falle von Änderungen im paketorientierten Netzwerk so genannte Link-State-Advertisements oder auch Link-State-Announcements (LSA) im Netzwerk versendet. In einer Topolo giedatenbank werden dabei die LSA der umgebenden Netzknotenelemente bzw. Router Netzwerk abgebildet, wodurch jeder Router die gesamte benachbarte Topologie kennt. Da die Änderungen üblicherweise unmittelbar bzw. »instantan« an alle Router des Netzwerks übermittelt werden, besitzen LSA-RoutingProtokolle eine gute »Konvergenz«, d.h. ein schnelles dynamisches Anpassungsverhalten in Bezug auf Änderungen in der Netztopologie.

Das OSPF-Protokoll regelt die Übermittlung von Informationen zur Verfügbarkeit von Verbindungswegen zwischen paketorientierten Netzwerken und unterstützt insbesondere hierarchische Netzwerkstrukturen. Es zeichnet sich durch eine schnelle Konvergenz aus. Kernstück von OSPF ist die Topologiedatenbank, die eine Liste aller Router und deren Verbindungen bzw. Links enthält. Zum Aufbau und zur Pflege der Topologiedatenbank ist ein Austausch von LSA zwischen benachbarten Routern vorgesehen.

Das IS-IS-Protokoll ist ein weiteres Link-State-Protokoll. Da erste IS-IS-Implementierungen der Firma Cisco Systems Inc., San Jose, California, USA wesentlich robuster als die OSPF Implementierungen waren, wurde von vielen Netzbetreibern vorwiegend das IS-IS-Protokoll eingesetzt.

Der bereits beschriebene Austausch von Hello-Nachrichten zur laufenden Anzeige der Betriebsbereitschaft erfolgt bei Link-State-Protokollen üblicherweise periodisch mit einem Zeitintervall von 10 Sekunden zwischen zwei Hello-Nachrichten. Bei einem eingestellten Intervall von 10 Sekunden wird nach Ablauf einer bestimmten Toleranzzeit - auch »Dead Interval« genannt - welche üblicherweise 40 Sekunden beträgt, durch einen ersten Router ein Ausfall eines benachbarten zweiten Routers angenommen, falls in dieser Zeitdauer keine weiteren Hello-Nachrichten vom zweiter Router am ersten Router eingetroffen sind. In diesem Zustand wird dann davon ausgegangen, dass der benachbarte Router nicht weiter verfügbar ist.

Bei üblichen Einstellungen des Dead Interval dauert es also 40 Sekunden, bis durch die genannten Link-State-Protokolle nach einem Ausfall eines Routers oder einer Schnittstelle (Interface) dieses Routers ein Ausfall festgestellt wird und Maßnahmen eingeleitet werden können, welche das Ziel haben, die von dem ausgefallenen Router bislang ausgeführten Operationen durch Operationen eines intakten benachbarten Routers zu ersetzen, um bei einer in paketorientierten Netzwerken üblichen Redundanz von Verbindungswegen eine Erreichbarkeit aller Netzknotenelemente im paketorientierten Netzwerk wiederherzustellen. Die Dauer des Anpassungsverhaltens in Reaktion auf Änderungen in der Netztopologie wird auch »Konvergenzzeit« genannt.

Da die Anpassung überhaupt erst nach der Feststellung des Ausfalls, also nach Ablauf des Dead Interval beginnen kann, ist die mit den genannten Verfahren verbundene Konvergenzzeit sehr lang und damit für viele Einsatzbereiche inakzeptabel.

Zur Verkürzung der Konvergenzzeit wurde vorgeschlagen, das Zeitintervall zwischen zwei Hello-Nachrichten zu verkürzen, d.h. einen entsprechenden Zeitgeber zur Vorgabe des Zeitintervalls in jedem Router auf einen kürzeren Zeitwert einzustellen.

Eine derartige Maßnahme erhöht jedoch sowohl die mit der gestiegenen Bearbeitung der Hello-Nachrichten verbundene Rechenlast jedes Routers als auch die Netzlast im gesamten paketorientierten Netzwerk, insbesondere in Fällen, in denen die Erkennung eines Betriebsausfalls eines benachbarten Routers in einen Millisekundenbereich verkürzt werden soll.

Aufgabe der Erfindung ist eine Verkürzung der Konvergenzzeit bei Ausfall eines Routers bei gleichzeitig weitgehender Beibehaltung der Rechenlast eines Routers und/oder der Netzlast im paketorientierten Netzwerk auf einem niedrigen Niveau. Eine Lösung der Aufgabe erfolgt durch ein Verfahren mit den Merkmalen des Patentanspruchs 1.

Erfindungsgemäß ist ein Verfahren zur Kommunikation zwischen Netzknotenelementen vorgesehen, bei denen die Netzknotenelemente untereinander mit einem Verbindungszustandsprotokoll kommunizieren. Dieses Verfahren beginnt mit einem Empfang einer Verbindungszustandsmeldung von einem benachbarten zweiten Netzknotenelement an einem ersten Netzknotenelement. Derartige Verbindungszustandsmeldungen sind in einem Verbindungszustandsprotokoll bzw. -routingprotokoll periodisch oder nach einer Verbindungszustandsänderung vorgesehen. In der Verbindungszustandsmeldung enthaltenen Verbindungszustände werden mit mindestens einem gespeicherten Verbindungszustand eines zum ersten Netzknotenelement benachbarten Netzknotenelements verglichen. Die gespeicherten Verbindungszustände aller benachbarten Netzknotenelemente stehen üblicherweise in einer Topologiedatenbank, die am betrachteten ersten Netzknotenelement lokal, oder zentral an anderer Stelle im betrachteten paketorientierten Netzwerk vorgehalten wird. Schließlich erfolgt eine Auswertung der verglichenen Verbindungszustände. Ergibt diese Auswertung, dass entweder das zweite Netzknotenelement oder ein anderes Netzknotenelement einen fehlenden Verbindungszustand aufweist, wird dies als Kriterium für einen Ausfall eines benachbarten Netzknotenelements gewertet. In diesem Fall kann im betrachteten Netzknotenelement davon ausgegangen werden, dass der benachbarte Router nicht mehr verfügbar ist.

Ein wesentlicher Vorteil der Erfindung besteht in der Bewertung der Verbindungszustände - statt einer im Stand der Technik bislang praktizierten Auswertung periodischer Hello-Nachrichten - als Kriterium eines Ausfalls benachbarter Netzelemente. Das mit den erfindungsgemäßen Mitteln ausgestaltete Netzknotenelement muss also nicht das vorher beschriebene »Dead Interval« von üblicherweise 40 Sekunden abwarten, um sich auf einen Ausfall eines benachbarten Netzknotenelements einzustellen und eine Neukalkulation der Topologie auf Basis des kürzesten Pfades und eine Überarbeitung der Routing-Tabellen durchzuführen. In vorteilhafter Weise ist mit Anwendung des erfindungsgemäßen Verfahrens also eine Erkennung eines Verbindungsverlustes zu einem oder mehreren benachbarten Routern innerhalb eines wesentlich kürzeren Zeitintervalls möglich. In vorteilhafter Weise sind Zeitintervalle im Millisekundenbereich zu realisieren, ohne einen zu überprüfenden Router mit einer Vielzahl von Hello-Nachrichten zu belasten.

Der gegenstand der erfindung ist definiert durch die unabhängigen Ansprüche 1, 6, 7 und 8.

Das erfindungsgemäße Verfahren gestattet in vorteilhafter Weise die Auswertung von vollständigen Ausfällen eines Netzknotenelements als auch von Schnittstellen- (Interface-) Ausfällen eines ansonsten intakt gebliebenen Netzknotenelements.

Ist ein Netzknotenelement vollständig ausgefallen, kann dieses in nahe liegender Weise auch keine Verbindungszustandsmeldungen mehr senden. Das erfindungsgemäße Verfahren beschränkt sich bei der Erkennung eines Verbindungsausfalls zu diesem Netzelement jedoch nicht auf die bloße Feststellung, dass eine an sich fällige Verbindungszustandsmeldung auf längere Dauer ausgeblieben ist und das zugehörige Netzknotenelement demgemäß ausgefallen sein muss. Durch einen Vergleich der - vorzugsweise mehreren oder sogar allen benachbarten Netzknotenelementen zugehörigen - Verbindungszustände mit mindestens einem gespeicherten Verbindungszustand eines benachbarten Netzknotenelements ist es auch möglich, in Verbindungszustandsmeldungen der benachbarten intakten Netzknotenelemente ein ausgefallenes Netzknotenelement zu erkennen, da die Verbindungszustandsmeldungen nicht nur den Verbindungszustand des meldenden Netzknotenelement an das gemeldete Netzknotenelement enthalten. Vielmehr enthält die Verbindungszustandsmeldung des meldenden Netzknotenelements alle Verbindungszustände der zu dem meldenden Netzknotenelement benachbarten Netzknotenelemente.

Weitere Ausgestaltungsvarianten sind Gegenstand der Unteransprüche.

Üblicherweise sind gespeicherte Verbindungszustände in einer Topologiedatenbank vorgehalten. Diese ist entweder im ersten Netzknotenelement als lokale Datenbank oder in einem in einem zentralen Netzelement als zentrale Datenbank implementiert.

Gemäß einer vorteilhaften Ausgestaltung der Erfindung erfolgt nach einem Vergleich der in der Verbindungszustandsmeldung enthaltenen mit den gespeicherten Verbindungszuständen eine Überprüfung, ob beide vollständig übereinstimmen. In diesem Fall unterbleibt eine Auswertung der verglichenen Verbindungszustände als Kriterium für einen Ausfall eines benachbarten Netzknotenelements, da offensichtlich keine Zustandsänderung eingetreten ist, deren Auswertung nur unnötige Rechenkapazität erfordern würde.

Eine weitere Ausgestaltung des erfindungsgemäßen Verfahrens ist dadurch geprägt, dass nach einer einen Ausfall eines benachbarten Netzknotenelements ergebenden Auswertung eine Neukalkulation einer Topologie auf Basis benachbarter verfügbarer Netzknotenelemente unter Berücksichtigung des ausgefallenen benachbarten Netzknotenelements vorgenommen wird.

Diese Neukalkulation erfolgt - wie gemäß der erfinderischen Idee vorgesehen - ohne ein Ausfallzeitintervall (»Dead Interval«) auf Basis periodischen Verbindungsmeldungen (»Hello-Nachrichten«) abzuwarten.

Ein Ausführungsbeispiel mit weiteren Vorteilen und Ausgestaltungen der Erfindung wird im folgenden anhand einer Zeichnung näher erläutert.

Die einzig FIG zeigt ein erstes paketorientiertes Netzwerk A, ein zweites paketorientiertes Netzwerk B und ein zwischen beiden Netzwerken A,B liegendes Netz FR, welches eine Eigenschaft besitzt, im Fall eines »Link Down« auf einer der beiden Netzwerke A,B nicht automatisch zu einem Link Down auf der gegenüberliegenden Seite der Netzwerke B,A zu führen. Das Netz FR wird beispielsweise durch ein Frame Relay oder durch einen Ethernet Switch gebildet.

Eine Verwendung eines Frame Relays oder eines Ethernet Switch dient als Veranschaulichung des erfindungsgemäßen Verfahrens in einem praktischen, aus mehreren Netzwerktypen bestehenden Umfeldes; diese sind jedoch nicht funktionsnotwendig zur Ausführung des erfindungsgemäßen Verfahrens.

Im ersten Netzwerk A ist ein erster Router 1 und ein dritter Router 3 angeordnet, im zweiten Netzwerk B ist ein zweiter Router 2 und ein vierter Router 4 angeordnet. Der erste Router 1 ist innerhalb des ersten paketorientierten Netzwerks A mit dem dritten Router 3 verbunden. Der zweite Router 2 ist innerhalb des zweiten paketorientierten Netzwerks B mit dem vierten Router 4 verbunden.

Die paketorientierten Netzwerke A,B sind durch schmalbandige Verbindungen L1,L2 miteinander verbunden, wodurch eine Verbindung zwischen beiden paketorientierten Netzwerken A,B redundant ausgeführt ist.

Ein Standardweg zwischen dem ersten Netzwerk A und dem zweiten Netzwerk B erfolgt über die erste Verbindung L1 zwischen dem ersten Router 1 und dem zweiten Router 2. Eine zur ersten Standardverbindung L1 redundante zweite Verbindung L2 gewährleistet im Falle eines Ausfallens der ersten Standardverbindung L1 eine Verbindung des ersten paketorientierten Netzwerks A mit dem zweiten paketorientierten Netzwerk B.

Aufgrund der schmalbandigen - d.h. über eine niedrige Bandbreite verfügenden - Natur der ersten Verbindung L1 verbietet sich aufgrund eines damit verbundenen hohen Bandbreitenbedarf eine periodische Übermittlung von Hello-Nachrichten im Millisekundenbereich.

Die Erfindung nutzt eine erweiterte Verwendung einer in vielen Routern enthaltenen - nicht dargestellten - Topologiedatenbank bzw. alternative Speicherorganisationen, welche der Speicherung von LSA dienen. Aus der Topologiedatenbank werden Informationen zum Verbindungszustand LSA (Link State Advertisement) der benachbarten Netzknotenelemente entnommen. Diese LSA beschreiben einen Verbindungszustand jedes Routers bezüglich des gemeinsamen Kommunikationsmediums, z.B. Ethernet, Frame Relay, ATM, HDLC usw.

Bei einem neu empfangenen LSA prüft ein Router, ob das LSA gegenüber dem zuvor empfangenen LSA des benachbarten Routers verändert wurde. Ist dies der Fall, erfolgt eine weitere Prüfung, ob gemäß den in den LSA enthaltenen Daten eine nicht mehr bestehende Verbindung des überprüften Routers zum gemeinsamen Kommunikationsmedium besteht.

Im folgenden wird zunächst von einem Ausfall einer - nicht dargestellten - Schnittstelle des zweiten Routers 2 zum ersten Router 1 ausgegangen.

In einem ersten Szenario wird davon ausgegangen, dass eine Schnittstelle des zweiten Routers 2 zum ersten Router 1 über die Verbindung L1 ausgefallen ist, der zweite Router 2 ansonsten aber intakt geblieben ist. In diesem Fall wird nach Ausfall der Schnittstelle des zweiten Routers 2 zur Verbindung L1 ein LSA (Link-State Advertisement) auf allen intakt verbliebenen Schnittstellen des zweiten Routers 2 gesendet. Dieses LSA wird zum Beispiel als »Broadcast«- oder »Multicast«-Nachricht gesendet und trifft zunächst auch am vierten Router 4 ein. Über den vierten Router 4, der zweiten Verbindung L2 und dem dritten Router 3 erreicht die ausgesendete LSA den ersten Router 1 über die redundante zweite Verbindung L2. Der erste Router 1 kann somit unmittelbar erkennen, dass sein benachbarter zweiter Router 2 nicht mehr direkt erreichbar ist.

In einem zweiten Szenario wird von einem kompletten Ausfall des zweiten Routers 2 ausgegangen.

Im Fall eines Ausfalls des zweiten Routers 2 sendet der vierte Router 4 ein LSA, in dessen Datensatz eine Verbindung des zweiten Routers 2 fehlt, über den dritten Router 3 zum ersten Router 1. Bei einer Analyse des LSA erkennt der erste Router 1, dass sein benachbarter zweiter Router 2 nicht mehr erreichbar ist.

Für eine nicht dargestellte - Ausführungsform, in der der zweite Router 2 mit dem vierten Router 4 über eine direkte Verbindung (Glasfaser oder Kabel) verbunden ist, ist es dem vierten Router 4 möglich, schneller einen Ausfall des zweiten Routers 2 zu erkennen, als dem ersten Router 1 dies durch ein Auswerten einer fehlenden Hello-Nachricht möglich ist. Zwar kann bei einer durch das breitbandige Medium (Glasfaser oder Kabel) hohen verfügbaren Bandbreite zwischen dem zweiten Router 2 und dem vierten Router 4 ein niedriges Zeitintervall zwischen gesendeten Hello-Nachrichten verwendet werden, ohne dass ein damit verbundener Bandbreitenverbrauch stark ins Gewicht fällt, jedoch würde ein Einsatz des gleichen kurzen Zeitintervalls zwischen zwei Hello-Nachrichten auf der schmalbandigen Verbindung L1 zu einer hohen Netzbelastung führen, weshalb das erfindungsgemäße Verfahren auch für einen Totalausfall des hier betrachteten zweiten Routers 2 vorteilhafter als ein kürzeres Intervall zwischen zwei Hello-Nachrichten ist.

Im Falle des Ausfalles einer Schnittstelle eines zu überprüfenden Routers gelangen Zustandsnachrichten, welche einen Ausfall des entsprechenden Routers anzeigen (»Link Down«-LSA) durch einen redundanten Weg durch das paketorientierte Netzwerk zu den ehemaligen benachbarten Routern.

Fällt ein Router komplett aus - und nicht nur eine seiner Schnittstellen - sind nicht nur die Verbindungen zu den entsprechenden Nachbar-Routern relevant, sondern auch die LSA zu den anderen Verbindungen des ausgefallenen Routers. Der Router, der anhand eines entsprechenden ersten LSA als erster erkennt, dass sein benachbarter Router ausgefallen ist, informiert über ein zweites LSA die restlichen im paketorientierten Netzwerk noch erreichbaren Router davon. Kommen derartige LSA über redundante Wege bei anderen ehemals benachbarten Routern des ausgefallenen Routers an, können diese unmittelbar davon ausgehen, dass ihr benachbarter Router nicht mehr erreichbar ist.

In einer weiteren Ausführungsform der Erfindung ist vorgesehen, dass sich ein Router nach Erhalt und Auswertung eines LSA, das auf einen Ausfall eines benachbarten Routers hindeutet, mit einem oder mehreren an diesen benachbarten Router gesendeten Hello-Nachrichten von der Nicht-Erreichbarkeit dieses benachbarten Routers abschließend überzeugt. Diese Hello-Nachrichten werden vorzugsweise in einem geringen zeitlichen Abstand voneinander gesendet. Die Grundidee dieser Ausführungsform besteht darin, dass die nach Überprüfung auf einen Ausfall eines benachbarten Routers hindeutende LSA als Trigger verwendet wird, den benachbarten Router mit einer schnellen Sequenz von Hello-Nachrichten abzuprüfen. Antwortet der benachbarte Router allerdings auf die gesendeten Hello-Nachrichten, kann der entsprechende Verbindungszustand in der Topologiedatenbank als bestehend vermerkt bleiben. Antwortet der benachbarte Router jedoch nicht, kann seitens des überprüfenden Routers nun mit noch höherer Sicherheit davon ausgegangen werden, dass der benachbarte Router z.B. wegen eines Ausfalls tatsächlich nicht mehr antworten kann und wird dann in der Topologiedatenbank als ausgefallen vermerkt oder ein entsprechender Eintrag des ausgefallenen Routers gelöscht.

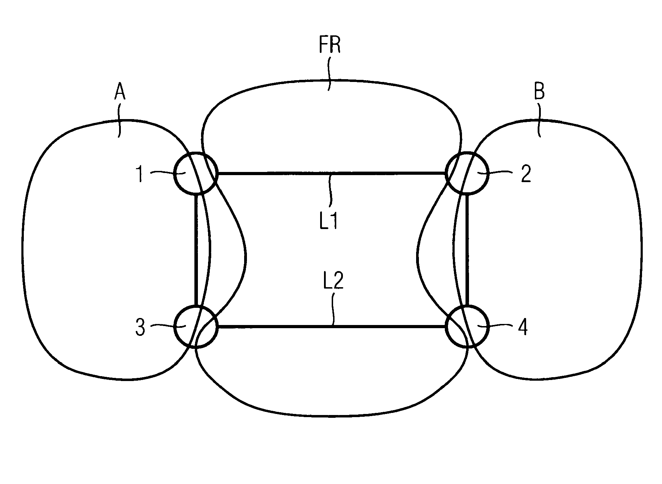

## Patentansprüche

1. Verfahren zur Kommunikation zwischen Netzknotenelementen, bei denen die Netzknotenelemente untereinander mit einem Verbindungszustandsprotokoll kommunizieren, mit folgenden Schritten:
a) Empfang einer Verbindungszustandsmeldung von einem benachbarten zweiten Netzknotenelement (3) an einem ersten Netzknotenelement (1),
**gekennzeichnet durch**
b) Vergleich der in der Verbindungszustandsmeldung enthaltenen Verbindungszustände mit mindestens einem gespeicherten Verbindungszustand eines zum ersten Netzknotenelement (1) benachbarten dritten Netzknotenelements (2), wobei das zweite und das dritte Netzknotenelement nicht identisch sind.
c) Auswertung der verglichenen Verbindungszustände als Kriterium für einen Ausfall des benachbarten dritten Netzknotenelements (2).

2. Verfahren nach Anspruch 1,
**dadurch gekennzeichnet,**
**dass** die gespeicherten Verbindungszustände in einer Topologiedatenbank vorgehalten sind.

3. Verfahren nach Anspruch 2,
**dadurch gekennzeichnet,**
**dass** die Topologicdatenbank im ersten Netzknotenetement (1) vorgehalten ist

4. Verfahren nach Anspruch 2,
**dadurch gekennzeichnet,**
**dass** die Topologiedatenbank in einem zentrales Netzelement vorgehalten ist.

5. Verfahren nach einem der vorhergehenden Ansprüche,
**dadurch gekennzeichnet,**
**dass** nach der Auswertung gemäß Schritt c) eine Neukalkulation einer Topologie auf Basis benachbarter verfügbarer Netzknotenelemente unter Berücksichtigung des ausgefallenen benachbarten Netzknotenelements vorgenommen wird, ohne ein Ausfallzeitintervall auf Basis periodischer Verbindungsmeldungen abzuwarten.

6. Verfahren zur Kommunikation zwischen Netzknotenclementen, bei denen die Netzknotenelemente untereinander mit einem Verbindungszustandsprotokoll kommunizieren, mit folgenden Schritten:
a) Empfang einer Verbindungszustandsmeldung von einem benachbarten zweiten Netzknotenelement (3) an einem ersten Netzknotenclement (1),
**gekennzeichnet durch**
b) Vergleich der in der Verbindungszustandsmeldung enthaltenen Verbindungszustände mit mindestens einem gespeicherten Verbindungszustand eines zum ersten Netzknotenelement (1) benachbarten dritten Netzknotenelements (2), wobei das zweite und das dritte Netzknotenelement nicht identisch sind.
c) Auswertung der verglichenen Verbindungszustände als Kriterium für einen Ausfall des benachbarten dritten Netzknotenelements (2), wobei einem Vergleich gemäß Schritt b) eine Überprüfung folgt, ob in der Verbindungszustandsmeldung enthaltene Verbindungszustände mit den gespeicherten Verbindungszuständen vollständig übereinstimmen und im positiven Fall eine Auswertung gemäß Schritt c) unterbleibt.

7. Computerprogrammprodukt mit Mitteln zur Durchführung des Verfahrens nach einem der vorhergehenden Ansprüche, wenn das Computerprogrammprodukt an einem Netzknotenelement (1, 2, 3, 4) zur Ausführung gebracht wird.

8. Erstes Netzknotenclement (1), vorgesehen zur Kommunikation mit anderen Netzknotenelementen nach einem Verbindungszustandsprotokoll umfassend:
a) Mittel zum Empfang einer Verbindungszustandsmeldung von einem benachbarten zweiten Netzknotenelement (3) am ersten Netzknotenelement (1),
**gekennzeichnet durch**,
b) Mittel zum Vergleich der in der Verbindungszustandsmeldung enthaltenen Verbindungszustände mit mindestens einem gespeicherten Verbindungszustand eines zum ersten Netzknotenelement (1) benachbarten dritten Netzknotenelements (2), wobei das zweite und das dritte Netzknotenelement nicht identisch sind.
c) Mittel zur Auswertung der verglichenen Verbindungszustände als Kriterium für einen Ausfall des benachbarten dritten Netzknotenelements (2) .

9. Erstes Netzknotenelement (1) nach Anspruch 8,
**gekennzeichnet durch**
eine Ausgestaltung als Router.

10. Erstes Netzknotcnelement (1) nach Anspruch 9,
**gekennzeichnet durch**
einen Einsatz des IS-IS-Protokolls als Verbindungszustandsprotokoll.

11. Erstes Netzknotenelement (1) nach Anspruch 9,
**gekennzeichnet durch**
einen Einsatz des OSPF-Protokolls als Verbindungszustandsprotokoll.

## Claims

1. Method for communicating between network node elements where the network node elements communicate with each other using a connection state protocol, said method having the following steps:
a) receipt of a connection state message from an adjacent second node network element (3) by a first network node element (1), **characterized by**
b) comparison of the connection states contained in the connection state message with at least one stored connection state of a third network node element (2) adjacent the first network node element (1), wherein the second and the third network node elements are not identical,
c) evaluation of the compared connection states as criterion for a failure of the adjacent third network node element (2).

2. Method according to Claim 1, **characterized in that** the stored connection states are maintained in a topology data base.

3. Method according to Claim 2, **characterized in that** the topology data base is maintained in the first network node element (1).

4. Method according to Claim 2, **characterized in that** the topology data base is maintained in a central network element.

5. Method according to one of the preceding claims, **characterized in that** after the evaluation in step c), a new topology is calculated based on adjacent available network node elements, taking into consideration the failed adjacent network node element without waiting for a down time interval on the basis of periodic connection messages.

6. Method for communicating between network node elements where the network node elements communicate with each other using a connection state protocol, said method having the following steps:
a) receipt of a connection state message from an adjacent second node network element (3) by a first network node element (1), **characterized by**
b) comparison of the connection states contained in the connection state message with at least one stored connection state of a third network node element (2) adjacent the first network node element (1), wherein the second and the third network node elements are not identical,
c) evaluation of the compared connection states as criterion for a failure of the adjacent third network node element (2), wherein a comparison as in step c) is followed by a check whether connection states contained in the connection state message are a complete match with the stored connection states and in the positive case an evaluation as in step c) does not occur.

7. Computer program product with means for accomplishing the method according to one of the preceding claims, when the computer program product is moved to a network node element (1, 2, 3, 4) to be run.

8. First network node element (1), provided for communicating with other network node elements according to a connection state protocol, comprising:
a) means for receiving a connection state message from an adjacent second network node element (3) by the first network node element (1), characterize by
b) means for comparing the connection states contained in the connection state message with at least one stored connection state of a third network node element (2) adjacent the first network node element (1), wherein the second and the third network node elements are not identical,
c) means for evaluating the compared connection states as criterion for a failure of the adjacent third network node element (2).

9. First network node element (1) according to Claim 8, **characterized by** a development as router.

10. First network node element (1) according to Claim 9, **characterized by** a use of the IS-IS (Intermediate System to Intermediate System) protocol as connection state protocol.

11. First network node element (1) according to Claim 9, **characterized by** a use of the OSPF (Open Shortest Path First) protocol as connection state protocol.

## Revendications

1. Procédé pour la communication entre des éléments de noeud de réseau qui communiquent entre eux avec un protocole d'état de liaison, comportant les étapes suivantes :
a) réception dans un premier élément de noeud de réseau d'un message d'état de liaison provenant d'un deuxième élément de noeud de réseau voisin (3), **caractérisés par**
b) comparaison des états de liaison contenus dans le message d'état de liaison avec au moins un état de liaison enregistré d'un troisième élément de noeud de réseau (2) voisin du premier élément de noeud de réseau (1), le deuxième et le troisième éléments de noeud de réseau n'étant pas identiques,
c) évaluation des états de liaison comparés en tant que critère pour une défaillance du troisième élément de noeud de réseau voisin (2).

2. Procédé selon la revendication 1,
**caractérisé en ce que**
les états de liaison enregistrés sont stockés dans une banque de données de topologie.

3. Procédé selon la revendication 2,
**caractérisé en ce que**
la banque de données de topologie est stockée dans le premier élément de noeud de réseau (1).

4. Procédé selon la revendication 2,
**caractérisé en ce que**
la banque de données de topologie est stockée dans un élément de réseau central.

5. Procédé selon l'une quelconque des revendications précédentes,
**caractérisé en ce que,**
après l'évaluation selon l'étape c), il est réalisé de nouveaux calculs d'une topologie sur la base d'éléments de noeud de réseau disponibles voisins en tenant compte de la défaillance de l'élément de noeud de réseau voisin sans attendre un intervalle de temps mort sur la base de messages de liaison périodiques.

6. Procédé pour la communication entre des éléments de noeud de réseau qui communiquent entre eux avec un protocole d'état de liaison, comportant les étapes suivantes :
a) réception dans un premier élément de noeud de réseau (1) d'un message d'état de liaison provenant d'un deuxième élément de noeud de réseau voisin (3), **caractérisé par**
b) comparaison des états de liaison contenus dans le message d'état de liaison avec au moins un état de liaison enregistré d'un troisième élément de noeud de réseau (2) voisin du premier élément de noeud de réseau (1), les deuxième et troisième éléments de noeud de réseau n'étant pas identiques,
c) évaluation des états de liaison comparés en tant que critère pour une défaillance du troisième élément de noeud de réseau voisin (2), une comparaison selon l'étape b) étant suivie par une vérification si des états de liaison contenus dans le message d'état de liaison correspondent entièrement aux états de liaison enregistrés et, dans le cas positif, une évaluation selon l'étape c) n'a pas lieu.

7. Produit de programme informatique doté de moyens pour exécuter le procédé selon l'une quelconque des revendications précédentes lorsque le produit de programme informatique est mis à exécution dans un élément de noeud de réseau (1, 2, 3, 4).

8. Premier élément de noeud de réseau (1), prévu pour la communication avec d'autres éléments de noeud de réseau selon un protocole d'état de liaison, comprenant :
a) des moyens destinés à recevoir dans le premier élément de noeud de réseau (1) un message d'état de liaison d'un deuxième élément de noeud de réseau voisin (3), **caractérisé par**
b) des moyens pour comparer les états de liaison contenus dans le message d'état de liaison avec au moins un état de liaison enregistré d'un troisième élément de noeud de réseau voisin (2) du premier élément de noeud de réseau (1), les deuxième et troisième éléments de noeud de réseau n'étant pas identiques,
c) des moyens pour évaluer les états de liaison comparés en tant que critère pour une défaillance du troisième élément de noeud de réseau voisin (2).

9. Premier élément de noeud de réseau (1) selon la revendication 8,
**caractérisé par**
un agencement sous forme de routeur.

10. Premier élément de noeud de réseau (1) selon la revendication 9,
**caractérisé en ce que**
le protocole d'état de liaison mis en oeuvre est le protocole IS-IS.

11. Premier élément de noeud de réseau (1) selon la revendication 9,
**caractérisé en ce que**
le protocole d'état de liaison mis en oeuvre est le protocole OSPF.
